(19) Europäisches Patentamt
European Patent Office
Office européen des brevets

(11) EP 4 600 321 A1

(12) EUROPEAN PATENT APPLICATION

(43) Date of publication:
**13.08.2025 Bulletin 2025/33**

(21) Application number: **24156858.3**

(22) Date of filing: **09.02.2024**

(51) International Patent Classification (IPC):
***C09J 5/02*** *(2006.01)* ***C08C 19/14*** *(2006.01)*
***C08J 7/12*** *(2006.01)*

(52) Cooperative Patent Classification (CPC):
**C08J 7/126; C08C 19/14; C09J 5/02;**
C09J 2301/304; C09J 2407/008; C09J 2409/008;
C09J 2421/008; C09J 2477/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Henkel AG & Co. KGaA**
**40589 Düsseldorf (DE)**

(72) Inventors:
- **Salmoiraghi, Eleonora**
  **20018 Sedriano (MI) (IT)**
- **Cremonesi, Stefano**
  **27010 Siziano (Pavia) (IT)**
- **Signorile, Marco**
  **27012 Certosa di Pavia (IT)**

(54) **METHOD OF BONDING ELASTOMERIC SUBSTRATES**

(57) The present disclosure is directed to a method for forming a bond between a first elastomeric substrate and a second elastomeric substrate, said process comprising:
i) applying a first and a second composition to the surface of said first substrate, wherein:
the first composition is an aqueous composition comprising chloride ($Cl^-$); and,
the second composition is an aqueous composition comprising peroxymonosulfate ($HSO_5^-/SO_5^{2-}$);

ii) optionally applying a third composition comprising activated carbon to the surface of said first substrate;
iii) incubating the first, second and optionally third composition with said first substrate for a time period and under conditions that allow chlorination of the surface of said first substrate;
iv) applying an adhesive composition to the surface of said second substrate, wherein the adhesive composition is a hot melt adhesive composition comprising, based on the total weight of the composition: from 50 to 100 wt.% of a) at least one base polymer selected from the group consisting of polyamides; from 0 to 50 wt.% of b) at least one tackifying resin; from 0 to 50 wt.% of c) wax; and, from 0 to 5 wt.% of d) at least one stabilizer selected from the group consisting of antioxidants, UV stabilizers, thermal stabilizers and hydrolysis stabilizers; and,
v) contacting the chlorinated surface of the first substrate and the surface of the second substrate with the applied adhesive under pressure to form the bond.

EP 4 600 321 A1

## Description

### FIELD OF THE INVENTION

The present disclosure is directed to a process for forming a bond between a first and second elastomeric substrates. More particularly, the present disclosure is directed to a process which utilizes a hot melt adhesive composition for forming a bond between a chlorinated surface of a first elastomeric substrate and a second elastomeric substrate.

### BACKGROUND TO THE INVENTION

Rubber-to-rubber bonding has conventionally been performed using pressure sensitive adhesives (PSA). The term "*pressure-sensitive adhesive*" means an adhesive or adhesive composition which carries out pressure sensitive adhesion with tack. Such adhesives have presented the important advantage that - after their application to the substrate(s) and solvent evaporation therefrom - the attained bond strength is significant enough to permit movement and positioning of the bonded rubber substrates without debonding.

As an illustrative example thereof, US Patent No. 3657046A (Furukawa et al.) discloses a process for adhering an unvulcanized compounded rubber to the same or a different compounded rubber, which process comprises: dissolving in an organic solvent a halogenated terpolymer of ethylene, an $\alpha$-olefin other than ethylene and a nonconjugated diolefin having a chlorine content of 13 to 50 percent by weight or a chlorine content of 10 to 30 percent by weight and a bromine content of 1 to 10 percent by weight; applying the resulting solution to at least one of the substrates; contacting the substrates with each other through the applied solution; and, heating the resulting assembly under pressure.

Problematically, given that pressure sensitive adhesives are solvent-based, their use does present health and safety issues. The constituent organic solvents thereof are volatile and flammable which imposes restrictions on the how the pressure sensitive adhesives are stored, transported and used. The emission of volatile organic compounds presents short-term health risks to the user of the adhesives, including *inter alia*: eye, nose and throat irritation; headaches; dizziness; breathing difficulties; and, mental confusion. Having regard to longer term exposure of the user, many organic solvents having utility in pressure sensitive adhesives are classified as carcinogenic, mutagenic or repro toxic reproduction (CMR).

Given these health and safety concerns, certain authors have focused on developing alternatives to solvent-borne pressure sensitive adhesives for the bonding of rubber substrates to other elastomeric substrates.

US Patent No. 10,202,527B2 (Kulkarni et al.) discloses a process for bonding two elastomers which comprises applying to a first of the elastomers a primer-less, two-part adhesive formulation. Part A of the composition comprises: a polyol; an adhesion promoter; a chain extender; a catalyst; and, water scavenger. Part B of the composition consists of: a polyurethane prepolymer synthesized from at least one polyol and at least one isocyanate; a silane adhesion promoter; and, a plasticizer. The applied two-part adhesive formulation is cured to form the adhesive as a polyurethane.

CN109762499A (Inst. Petrochemistry, Heilongjiang Academy of Sciences) describes the use of a room temperature curing high-toughness epoxy resin for the bonding of nitrile rubber to *inter alia* other elastomers. The adhesive is prepared by heating to 130°C and reacting for at least 3 hours one hundred parts by weight of epoxy resin, from 5 to 25 parts by weight of an acrylate polymer having terminal carboxy groups and 0.2 parts by weight of catalyst; the obtained product is cooled to room temperature and added to from 30 to 60 parts by weight of polysulfide rubber. The surfaces of the elastomers to be bonded are cleaned to remove oil therefrom but no further pre-treatments are effected before application of the adhesive thereto.

JPH10183082A (Taoka Chemical Co. Ltd.) describes a hot-melt adhesive composition having utility in rubber-to-rubber bonding which does not use conventional organic solvents. The composition comprise, based on the weight of the composition: from 10 to 80 wt.% of polyamide resin obtained from a dimer acid and a diamine; from 10 to 90 wt.% of saponified ethylene-vinyl acetate copolymer having a melt flow index of 200g/10min or lower and obtained by saponifying an ethylene-vinyl acetate copolymer having a vinyl acetate content of 3-60 wt.% to a saponification degree of about 30-100%; from 0.01 to 10 wt.% polycarboxylic anhydride; and, from 0 to 50 wt.% plasticizer and/or tackifier.

Whilst the above described solutions obviate the disadvantages associated with the volatile organic compound content of pressure sensitive adhesives, they are concomitantly considered to compromise the advantageous fast fixture time which was associated with said pressure sensitive adhesives.

### STATEMENT OF THE INVENTION

In accordance with a first aspect of the invention, there is provided a method for forming a bond between a first elastomeric substrate and a second elastomeric substrate, said process comprising:

i) applying a first and a second composition to the surface of said first substrate, wherein:

the first composition is an aqueous composition comprising chloride ($Cl^-$); and,
the second composition is an aqueous composition comprising peroxymonosulfate ($HSO_5^-/SO_5^{2-}$);

ii) optionally applying a third composition comprising activated carbon to the surface of said first substrate;
iii) incubating the first, second and optionally third composition with said first substrate for a time period and under conditions that allow chlorination of the surface of said first substrate;
iv) applying an adhesive composition to the surface of said second substrate, wherein the adhesive composition is a hot melt adhesive composition comprising, based on the total weight of the composition:

from 50 to 100 wt.% of a) at least one base polymer selected from the group consisting of polyamides;
from 0 to 50 wt.% of b) at least one tackifying resin;
from 0 to 50 wt.% of c) wax; and,
from 0 to 5 wt.% of d) at least one stabilizer selected from the group consisting of antioxidants, UV stabilizers, thermal stabilizers and hydrolysis stabilizers; and,

v) contacting the chlorinated surface of the first substrate and the surface of the second substrate with the applied adhesive under pressure to form the bond.

The recited method as a whole is conducive to being performed automatically.

Whilst the first and second elastomer substrates may be the same or different and may as such be independently selected, there is no particular intention to limit the elastomeric materials of which said first and second substrates may be constituted. It is however preferred that substrates are each characterized by comprising or consisting of at least one elastomer having a glass transition temperature (Tg) of from -120 to 0°C.

Independently of, or additional to this statement of preference, exemplary elastomers of which the first and second substrates may be constituted include: natural rubber (NR); derivatives of natural rubber, such as chlorinated natural rubber; ethylene-propylene-diene rubber (EPDM); ethylene propylene rubber (EPM); acrylonitrile-butadiene rubber (NBR); polychloroprene; styrene-butadiene rubber (SBR); styrene-butadiene-styrene rubber (SBS); butadiene rubber (BR); isoprene rubber (IR); styrene ethylene butylene styrene rubber (SEBS); rubbers based on copolymers of any two or more of styrene, butadiene, ethylene and isoprene; and, blends thereof. In the addition to the above indicated component monomers, elastomers may be derived from further -ene and diene co-monomers, such as: isobutylene; 2,3-dimethyl-1,3-butadiene; 1,4-hexadiene; 1,6-octadiene; 5-methyl-1,4-hexadiene; 3,7-dimethyl-1,6-octadiene; α-methyl styrene; vinyl toluene; and, tert-butyl styrene. Of the above, a preference may be noted for the elastomer substrates being either natural rubber, acrylonitrile-butadiene rubber (NBR) or styrene-butadiene rubber.

In step i) of the method, it is preferred that one of and desirably both of the first and second compositions are applied to the surface of said first substrate in an amount of from 50 to 500 $g/m^2$, preferably from 100 to 300 $g/m^2$. Where it is elected to apply a third composition in step ii), that third composition is preferably applied to the surface of said first substrate in an amount of from 200 to 900 $g/m^2$, preferably from 600 to 700 $g/m^2$.

As regards step iii) of the recited method, it is preferred that said step is characterized by at least one of:

a temperature of from 10 to 40°C, more preferably 20 to 30°C;
a reaction time of from 1 to 60 minutes, preferably 5 to 30 minutes.

For surety, these characterizations are not mutually exclusive and one or two may be practiced.

The method of the present invention may further comprise the step of cleaning the surface of the first substrate after step iii). It will be understood that this cleaning would occur prior to the performance of the recited contacting step v). The cleaning of the surface of the second substrate prior to step v) is also envisaged.

The defined hot-melt adhesive of the method is particularly advantageous for the rapidity with which the adhesive bond is formed through that contacting step v). Further, it is considered propitious that the hot-melt adhesive composition may be provided as a single component that does not require the addition of a curative or an accelerator to initiate the chemical reaction which form an adhesive bond.

Good bonding results have been obtained, where the or each base polymer of the hot melt adhesive composition is characterized by at least one of: a viscosity of from 300 to 3000 mPa.s, as measured under ASTM D3236; and, a softening point of from 80 to 200°C as measured under ASTM E28.

The present invention is further directed to a bonded product obtainable or obtained in accordance with the process as defined herein above and in the appended claims.

**DEFINITIONS**

As used herein, the singular forms "*a*", "*an*" and "*the*" include plural referents unless the context clearly dictates otherwise.

The terms "*comprising*", "*comprises*" and "*comprised of*" as used herein are synonymous with "*including*", "*includes*", "*containing*" or "*contains*", and are inclusive or open-ended and do not exclude additional, non-recited members, elements or method steps.

As used herein, the term "*consisting of*" excludes any element, ingredient, member or method step not specified. For completeness, the term "*comprising*" encompasses "*consisting of*".

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "*exemplary*" is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

The term "*plurality*" as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to x*" specifically includes 0 wt.%: the ingredient or part - a) or b) herein, for example - defined by said range may be absent from the material or may be present in the material in an amount up to x wt.%.

The molecular weights referred to in this specification can be measured with gel permeation chromatography (GPC) using polystyrene calibration standards, such as is done according to ASTM 3536.

The solids content referred to in this specification may be determined in accordance with ISO 3251 at a temperature of 125°C for an initial sample mass of 2.0 g.

Where mentioned, a calculated glass transition temperature ("$T_g$") of a polymer or co-polymer is that temperature which may be calculated by using the Fox equation:

$$1/T_{g,polymer} \approx \sum_i w_i / T_{g,i}$$

where: $T_{g,polymer}$ and $T_{g,i}$ are the glass transition temperature of the (co-)polymer and of the component monomers (i) respectively; and, $w_i$ is the mass fraction of component i. The glass transition temperatures of certain homopolymers may be found in the published literature.

The actual glass transition temperature ($T_g$) of a (co-)polymer can be determined by differential scanning calorimetry (DSC) according to the methodology of Deutsches Institut für Normung (DIN) 11357.

The term "*softening point*" as used herein refers to the temperature at which a material, such as a polymer, loses its solid characteristics and becomes relatively fluid. A material's softening point as given herein is that temperature measured using the standard ball and ring method according to ASTM E28.

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

Shore A hardness may be determined by pressing a hand-held durometer - such as Zwick 3130 - onto a sample (≥ 6 mm thickness; 3 seconds contact time before measurement) in accordance with DIN ISO 7619-1.

The "*acid value*" or "*acid number*" is a measure of the amount of free acid present in a compound: the acid value is the number of milligrams of potassium hydroxide required for the neutralization of free acid present in one gram of a substance (mg KOH/g). Any measured acid values given herein have been determined in accordance with German Standard DIN 53402.

The "*amine value*" given herein is obtainable by titration with 0.1 N hydrochloric acid - in accordance with ASTM D2572-91 - and thereafter calculated back to mg KOH/g.

As used herein, room temperature is 23°C plus or minus 2°C.

As used herein, "*ambient conditions*" means the temperature and pressure of the surroundings in which the composition is located or in which a coating layer or the substrate of said coating layer is located.

The term "*drying*" as used herein refers to the process of reducing the solvent content of the compositions to be dried. The term is intended to encompass both partial as well as complete removal of the solvent from the materials: typically the drying steps of the present disclosure should remove at least 90 wt.% or at least 95 wt.% of unbound solvent. Drying may be accompanied by the solidification, hardening or setting of a material.

In accordance with its conventional definition, a "*hot melt adhesive*" composition as used herein references an adhesive which is substantially free of solvent and which is solid at room temperature. It is applied to the bonding surface in hot and liquid state. After cooling, it adheres to the substrate(s).

As used herein, the term "*monomer*" refers to a substance that can undergo a polymerization reaction to contribute constitutional units to the chemical structure of a polymer. The term "*ethylenically unsaturated monomer*" as used herein, refers to any monomer containing a terminal double bond capable of polymerization under normal conditions of free-radical addition polymerization.

The term "*polymer*" as used herein, refers to a compound prepared by polymerizing monomers, whether of the same or a different type, that in polymerized form provide the recurring units that make up a polymer. The generic term "*polymer*" thus embraces both homopolymers and copolymers. The term "*copolymer*" as used herein is intended to denote a polymer having two or more different monomer units. The copolymer may, in certain embodiments, be a terpolymer with three or more different monomer units, or have four or more different monomer units. Further, copolymers of the present disclosure may be a random copolymer, a gradient copolymer, or a block copolymer formed by a controlled polymerization process.

The term "*elastomer*" is intended herein to designate a true elastomer or a polymer resin serving as a base constituent for obtaining a true elastomer. True elastomers are defined by the ASTM Special Technical Bulletin, No. 184 Standard as being materials which are capable of being stretched, at room temperature, to twice their intrinsic length and which, once they have been released after holding them under tension for 5 minutes, return to within 10 % of their initial length in the same time. For completeness, the term "*elastomer*" is intended to encompass: diene elastomers; non-diene elastomers; and, thermoplastic elastomers.

The term "*rubber*" as used herein means natural rubber and synthetic rubbers: it is intended to encompass vulcanized rubbers and to further encompass balata, gutta-percha, guayule, chicle and similar natural gums.

The term "*anionic polymerization*" refers to an ionic polymerization in which the kinetic chain carriers are anions. Accordingly, an anionic polymerization reaction is a chain reaction in which the growth of the polymer chain proceeds by reaction(s) between the monomer(s) and the reactive site(s) on the polymer chain with regeneration of the reactive site(s) at the end of each growth step. Herein the anionic polymerization is used to produce macromolecules from monomers that contain a carbon-carbon double bond. The polymerizations are initiated by nucleophilic addition to the double bond of the monomer, wherein the initiator comprises an anion, such as hydroxide, alkoxides, cyanide, or a carbanion.

As used herein, the term "*ring-opening polymerization*" denotes a polymerization in which a cyclic compound (monomer) is opened to form a linear polymer in the presence of an appropriate catalyst. The reaction system tends towards an equilibrium between the desired resulting high-molecular compounds, a mixture of cyclic compounds and / or linear oligomers, the attainment of which equilibrium largely depends on the nature and amount of the cyclic monomers, the catalyst used and on the reaction temperature. The use of solvents and / or emulsions in the polymerization is not recommended as their removal once the reaction is complete can be complex.

As used herein, the term "*olefin*" refers to any unsaturated hydrocarbon having the formula $C_nH_{2n}$, including isomers thereof. Monomer olefins from which polymers or co-polymer used in the present invention may be derived, should conventionally be $C_2$-$C_{12}$ olefins, for example from $C_2$-$C_{10}$ olefins. When mentioned, the "*alphaolefin*" or "*$\alpha$-olefin*" refers to an olefin which is distinguished by having a double bond at the primary or alpha ($\alpha$) position. Exemplary C2-C12 $\alpha$-olefins include but are not limited to ethylene, propylene, 1-butene, 1-pentene, 1-hexene, 1-octene, 1-decene and 1-dodecene.

The term "*polyalphaolefin*" is intended to encompass the hydrogenated derivatives thereof. As is known in the art, following a polyalphaolefin by polymerization, it is commonplace to hydrogenate the unsaturated double bonds which remain in the polymer mixture. Such hydrogenation of the unsaturated bonds is usually carried out with hydrogen in the presence of a hydrogenation catalyst of which examples include nickel, palladium, platinum and cobalt or the like.

As used herein, "*(meth)acryl*" is a shorthand term referring to "*acryl*" and/or "*methacryl*". Thus the term "*(meth) acrylamide*" refers collectively to acrylamide and methacrylamide.

As used herein, "*$C_1$-$C_n$ alkyl*" group refers to a monovalent group that contains 1 to n carbons atoms, that is a radical of an alkane and includes straight-chain and branched organic groups. As such, a "*$C_1$-$C_{18}$ alkyl*" group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may

be unsubstituted or may be substituted with one or more halogen. Where applicable for a given moiety (R), a tolerance for one or more non-halogen substituents within an alkyl group will be noted in the specification.

The term "*$C_1$-$C_{18}$ hydroxyalkyl*" as used herein refers to a HO-(alkyl) group having from 1 to 18 carbon atoms, where the point of attachment of the substituent is through the oxygen-atom and the alkyl group is as defined above.

An "*alkoxy group*" refers to a monovalent group represented by -OA where A is an alkyl group: non-limiting examples thereof are a methoxy group, an ethoxy group and an iso-propyloxy group. The term "*$C_1$-$C_{18}$ alkoxyalkyl*" as used herein refers to an alkyl group having an alkoxy substituent as defined above and wherein the moiety (*alkyl-O-alkyl*) comprises in total from 1 to 18 carbon atoms: such groups include methoxymethyl ($-CH_2OCH_3$), 2-methoxyethyl ($-CH_2CH_2OCH_3$) and 2-ethoxyethyl. Analogously, the term *"$C_7$-$C_{18}$ alkoxyaryl*" as used herein refers to an aryl group having an alkoxy substituent as defined above and wherein the moiety (*aryl-O-alkyl*) comprises in total from 7 to 18 carbon atoms.

The term "*$C_2$-$C_4$ alkylene*" as used herein, is defined as saturated, divalent hydrocarbon radical having from 2 to 4 carbon atoms.

The term "*$C_3$-$C_{18}$ cycloαlkyl*" is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, "*$C_2$-$C_{18}$ alkenyl*" refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "*cis*" and "*trans*" configurations, or alternatively, "*E*" and "*Z*" configurations, as appreciated by those of ordinary skill in the art. Examples of said $C_2$-$C_{20}$ alkenyl groups include, but are not limited to: $-CH=CH_2$; $-CH=CHCH_3$; $-CH_2CH=CH_2$; $-C(=CH_2)(CH_3)$; $-CH=CHCH_2CH_3$; - $CH_2CH=CHCH_3$; $-CH_2CH_2CH=CH_2$; $-CH=C(CH_3)_2$; $-CH_2C(=CH_2)(CH_3)$; $-C(=CH_2)CH_2CH_3$; - $C(CH_3)=CHCH_3$; $-C(CH_3)CH=CH_2$; $-CH=CHCH_2CH_2CH_3$; $-CH_2CH=CHCH_2CH_3$; - $CH_2CH_2CH=CHCH_3$; $-CH_2CH_2CH_2CH=CH_2$; $-C(=CH_2)CH_2CH_2CH_3$; $-C(CH_3)=CHCH_2CH_3$; - $CH(CH_3)CH=CHCH$; $-CH(CH_3)CH_2CH=CH_2$; $-CH_2CH=C(CH_3)_2$; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an "*$C_6$-$C_{18}$ aryl*" group used alone or as part of a larger moiety - as in "*aralkyl group*" - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; ($C_1$-$C_4$)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*alkylaryl*" refers to alkyl-substituted aryl groups and "*substituted alkylaryl*" refers to alkylaryl groups further bearing one or more substituents as set forth above. Further, as used herein "*aralkyl*" means an alkyl group substituted with an aryl radical as defined above.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The term "*base*" as used herein refers to a species: which is capable of abstracting a proton in either a polar or non-polar solvent; or, which is capable of donating a hydroxide anion ($OH^-$).

The present compositions are defined herein as being "*substantially free*" of certain compounds, elements, ions or other like components. The term "*substantially free*" is intended to mean that the compound, element, ion or other like component is not deliberately added to the composition and is present, at most, in only trace amounts which will have no (adverse) affect on the desired properties of the coating. An exemplary trace amount is less than 1000 ppm by weight of the composition. The term "*substantially free*" encompasses those embodiments where the specified compound, element, ion, or other like component is completely absent from the composition or is not present in any amount measurable by techniques generally used in the art.

The term "*anhydrous*" is intended to be equate to substantially free of water and thereby also encompasses those embodiments where water is completely absent from the composition or is not present in any amount measurable by techniques generally used in the art.

**DETAILED DESCRIPTION OF THE INVENTION**

**Surface Preparation Composition**

First Composition

As noted above, the first composition is an aqueous composition comprising chloride ($Cl^-$). It is preferred that the first composition is an aqueous solution of a chloride salt, containing chloride ions. Said chloride salt is preferably an alkali metal chloride salt: the use of potassium or sodium chloride may be mentioned with a preference noted for the use of sodium chloride due to its easy availability, costs and high water solubility.

The amount of chloride present in the aqueous solution is in principle only limited by the solubility of the chloride salt used. It is preferred, however, that the first composition is an aqueous solution which contains said chloride ions ($Cl^-$) in a concentration of from 0.5 to 6 moles per litre, for instance from 1 to 4 moles per litre or from 1.5 to 3 moles per litre.

In a preferred embodiment, the first composition has an acidic pH-value, preferably below 6, more preferably between 2 and 5.

In another embodiment, the first composition comprises from 0.1 to 5 wt.%, based on the weight of the composition, of at least one base. The composition may preferably comprise from 0.1 to 2.5 wt.%, for example from 0.1 to 2 wt.% of said least one base.

In certain embodiments, which are not intended to be mutually exclusive of the preferred weight ranges given above, the added amount of base should be such that the first composition has a pH of from 7 to 13, for example from 8 to 12.

Typically the or each base included in the composition will be selected from the group consisting of:

alkali metal hydroxides; alkali metal alkoxides;
ammonia;
quaternary ammonium hydroxide compounds having the general formula $(NR^a_4)^+(OH)^-$, wherein each $R^a$ is independently selected from $C_1$-$C_4$ alkyl;
aliphatic, aromatic or mixed aliphatic-aromatic monoamines having the general formula $N(R^b)(R^c)(R^d)$ wherein: $R^b$ is $C_1$-$C_{12}$ alkyl, $C_1$-$C_{12}$ hydroxyalkyl, $C_2$-$C_{12}$ alkoxyalkyl, $C_3$-$C_{18}$ cycloalkyl, $C_2$-$C_{12}$ alkenyl, $C_6$-$C_{10}$ aryl, $C_7$-$C_{18}$ aralkyl or $C_7$-$C_{18}$ alkylaryl; and, $R^c$ and $R^d$ are independently selected from hydrogen, $C_1$-$C_{12}$ alkyl, $C_1$-$C_{12}$ hydroxyalkyl, $C_2$-$C_{12}$ alkoxyalkyl, $C_3$-$C_{18}$ cycloalkyl, $C_2$-$C_{12}$ alkenyl, $C_6$-$C_{10}$ aryl, $C_7$-$C_{18}$ aralkyl or $C_7$-$C_{18}$ alkylaryl;
aliphatic, aromatic or mixed aliphatic-aromatic polyamines wherein two or more amino groups - $N(R^c)(R^d)$, which amino groups may be the same or different and of which $R^c$ and $R^d$ are as defined above, are linked by an alkylene, hydroxyalkylene, alkoxyalkylene, cycloalkylene, alkenylene, arylene, aralkylene or alkylarylene group;
$C_1$-$C_9$ heterocyclic amines;
$C_1$-$C_9$ heteroaryl amines;
basic amino acids, such as arginine and lysine; and,
amino sugars.

Suitable alkali metal alkoxides will conventionally be selected from aliphatic, aromatic or araliphatic alkoxides of lithium, sodium or potassium. Non-limiting examples thereof are lithium, sodium or potassium methoxide, ethoxide, n-propoxide, isopropoxide, n-butoxide, sec-butoxide, tert-butoxide, n-pentoxide, isopentoxide, hexoxide, amyl alkoxide, 3,7-dimethyl-3-octoxide, phenoxide, 2,4-di-tert-butylphenoxide, 2,6-di-tert-butylphenoxide, 3,5-di-tert-butylphenoxide and 2,4-di-tert-butyl-4-methylphenoxide. Preference is given to using the aliphatic ($C_1$-$C_4$)alkoxides, in particular methoxides, ethoxides, n-propoxides, isopropoxides, n-butoxides, sec-butoxides and tert-butoxides of sodium, potassium or lithium.

As noted, the composition may optionally comprise ammonia ($NH_3$) as a base, either independently or in combination with other of the listed bases. For completeness, the constituent weight of ammonia included in the composition is to be calculated on the basis of $NH_3$. The ammonia will be present in the aqueous compositions as an ammonia solution $NH_3$(aq) which encompasses weakly basic solutions of ammonia in water which may referred to in the art as ammonium hydroxide, ammonia water, ammonia liquor, aqua ammonia, aqueous ammonia, or simply ammonia. While the term "*ammonium hydroxide*" suggests a base with the composition $[NH_4^+][OH^-]$, it is virtually impossible to isolate samples of $NH_4OH$, insomuch as these ions do not comprise a significant fraction of the total amount of ammonia in an ammonia solution, except in the case of extremely dilute ammonia solutions.

In accordance with a preferred embodiment, the base of the first composition is selected from alkali metal hydroxides. A preference for sodium hydroxide or potassium hydroxide may be mentioned.

Second Composition

The second composition is an aqueous composition comprising a peroxymonosulfate salt, which salt contains

peroxymonosulfate anions ($HSO_5^-/SO_5^{2-}$). Exemplary salts are those of alkali metals and of alkaline earth metals: a preference may be noted for salts of alkali metals and in particular for the use of potassium peroxymonosulfate (KHSOs).

The second composition may be provided as: an aqueous solution; a slurry consisting of a saturated aqueous solution and particulate salt; or, a paste of the peroxymonosulfate salt in water. Such a paste may be derived simply by the wetting of the salt. That said, the peroxymonosulfate ($HSO_5^-/SO_5^{2-}$) concentration in the second composition, when used as a slurry, is preferably from 10 to 30 moles per litre, for example from 15 to 25 or from 18 to 24 moles per litre. The second composition is more preferably an aqueous solution. Most preferably the peroxymonosulfate (HSO5-/SO52-) concentration in the second composition is from 0.1 to 5 moles per litre, for example from 0.2 to 3 or from 0.4 to 1 moles per litre.

In a preferred embodiment, the second composition has an acidic pH-value, preferably below 6, more preferably below 4, most preferably between 0.5 and 4.

The chloride- and peroxymonosulfate-containing compositions are used in amounts that maximize the generation of free chlorine. Accordingly, the amount actually used can be determined based on the respective concentration of the solutions, slurries or pastes employed. Typically, if the concentrations are in the preferred ranges disclosed herein, the first and second composition are used in a ratio by weight of 3:1 to 1:3, preferably 2:1 to 1:2, more preferably 1.5:1 to 1:1.5, most preferably 1:1.

The first and second composition can, in addition to the chloride and the peroxymonosulfate, respectively, comprise adjunct ingredients, including but not limited to: co-solvent; levelling agent; foam suppressing agent; and, rheology control agent. Such adjunct ingredients may be included in one or both of said first and second compositions: the selection of adjuncts for each composition may be made independently. That aside, the first and second compositions should preferably be substantially free of organic solvents.

Independently, the total amount of rheology control agent in the first and second compositions should not exceed 10 wt.%, based on the weight of the composition. The first or second composition may comprise, for example from 0 to 5 wt.% or from 0 to 2 wt.% of rheology control agent, based on the weight of the composition.

The rheology control agent may comprise fillers, thickeners and combinations thereof. Exemplary thickeners include but are not limited to: clay based thickeners, such as organoclays; polysaccharides, such as guar and xanthan; polyacrylates; and, associative thickeners. Mention may, in particular, be made of the use as a polysaccharide thickener of cellulose or cellulose derivatives, such as: carboxymethylcellulose; methylcellulose; hydroxyethylcellulose; hydroxyethylmethylcellulose; hydroxypropylmethylcellulose; cellulose nanofibers; and, cellulose nanocrystals.

<u>Third Composition</u>

The third composition comprises or consists of activated carbon. The term "*activated carbon*" is being used in accordance with its recognized meaning in the art and may be derived from a number of substances having high carbon contents and of which examples include coal, coconut shell and wood. Whilst it is envisaged that the activated carbon may be provide as an aqueous dispersion optionally containing adjunct materials as mentioned above, it is preferred that the activated caron is provided in solid form. Mention may be made of the provision of activated carbon as: an activated carbon powder; granular activated carbon; and, activated carbon flakes. Exemplary activated carbon particles may have a particle size, as determined by sieve analysis, of less than 5mm, preferably less than 1mm or less than 0.5mm. Suitable activated carbon particles may be obtained from Kuraray Company.

**Surface Preparation Methods and Applications**

Prior to applying the compositions to the first elastomeric substrate, it is often advisable to pre-treat the relevant surfaces to remove foreign matter therefrom. Such treatments are known in the art and can be performed in a single or multi-stage manner constituted by, for instance, the use of one or more of: sonication; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

After said cleaning, the first and second compositions are sequentially or simultaneously applied to the surface of the first elastomeric substrate. Each composition may either be applied at ambient temperature. Alternatively, the temperature of each composition may independently be elevated prior to application to, for instance, a temperature in the range from 30°C to 90°C, for instance from 30°C to 70°C.

Techniques which may be used to apply the aqueous first and second composition to the surface of the first elastomeric substrate include to: dipping; painting; brushing; flow coating; roll coating; wiping; air-atomized spraying; air-assisted spraying; airless spraying; high-volume low-pressure spraying; and, air-assisted airless spraying.

Where the optional third composition is applied to the surface of the first substrate, this may be effected this application may be effected by any application technique suitable for particulate or pasteous compositions. Mention may

be made of: brushing; sprinkling; spray coating including electrostatic powder spraying; and, triboelectric coating.

The application of the third composition may occur before, after or simultaneously with the application of the first composition and, independently before, after or simultaneously with the application of the second composition. However, it is preferred that the second and third composition be applied either sequentially or simultaneously to the surface but both prior to the first composition. In an exemplary embodiment, the following application steps are followed in sequence: the second composition is applied to the surface; a cloth is placed on the surface with the second composition applied thereon and the third composition is then applied thereto; the first composition is applied on the cloth; the surface is covered with a foil, such as a plastic foil or similar covering, and the reaction of the first and second compositions allowed to proceed for a duration of from 5 to 60 minutes; the foil and the cloth are removed; and, the surface is washed with water and cleaned/dried with a cloth. It is noted that, when using a first composition which comprises a base, the usage of plastic foil in this manner is not required.

In various embodiments, the first, second and, where applicable, the third composition are each applied to the first elastomeric substrate surface in an amount of from 500 to 900 $g/m^2$, preferably from 600 to 700 $g/m^2$. The exact coating weight is dependent on the concentrations of each composition used, but the indicated ranges are particularly preferred if the concentrations disclosed herein are used.

The aforementioned incubation step (iii) for the compositions on the elastomeric surface is carried out for a time period long enough to allow the desired degree of surface modification. Again, this is dependent on the reaction conditions, but it has been found that the desired halogenated surface may be achieved at the stated concentrations of the compositions for incubation conditions comprising: a temperature of from 10 to 40 °C, preferably 20 to 30°Cand, a reaction time of from 5 to 60 minutes, preferably 15 to 30 minutes.

At the conclusion of the incubation step, the first elastomeric substrate may be dried using, for instance, ambient air drying, circulating warm air, forced air drying or infrared heating.

**Composition of the Hot Melt Adhesive**

The hot melt adhesive composition - which is to be applied in step iv) of the recited method - comprises, based on the total weight of the composition: from 50 to 100 wt.% of a) at least one base polymer selected from the group consisting of polyamides. from 0 to 50 wt.% of b) at least one tackifying resin; from 0 to 50 wt.% of c) wax; and, from 0 to 5 wt.% of d) at least one stabilizer selected from the group consisting of antioxidants, UV stabilizers, thermal stabilizers and hydrolysis stabilizers. It is preferred the hot melt adhesive composition be substantially free of solvent.

It will be evident from the compositional ranges above that polyamides may be used as the base polymer of the hot melt adhesive composition without further ingredients of parts b) to d) being present. However, typically at least one of those further components will be present in the composition: it is thereby preferred that said base polymer(s) of part a) constitute from 50 to 95 wt.% or from 60 to 95 wt.% of the composition.

The ingredients of the adhesive composition are preferably selected so that the composition is characterized by a melt viscosity at 190°C of less than 10000 mPa·s. Good results have been obtained where the hot melt adhesive composition is characterized by a melt viscosity at 190°C of less than 7500 mPa s or, more particularly, from 1000 to 5000 mPa.s.

a) Polyamides

The or each base polymer of the hot melt adhesive composition should be characterized by at least one of: a viscosity of from 300 to 6000 mPa.s, for instance from 1000 to 5000 mPa.s as measured under ASTM D3236 at 190°C; and, a softening point of from 80 to 200°C as measured under ASTM E28. Exemplary polyamides having utility in the hot melt adhesive composition may have a number average molecular weight (Mn) of from 5,000 to 20000 daltons, for instance from 5000 to 15000 daltons.

In accordance with an embodiment of the invention, the polyamide is obtainable or is obtained by the amidation *(condensation)* reaction of: an acid component comprising at least one dicarboxylic acid; and, an amine component comprising at least one primary diamine.

Dicarboxylic acids which are suitable for use in the above context include aliphatic, cycloaliphatic, and/or aromatic dicarboxylic acids. Further, the term "*dicarboxylic acids*" as used in this context includes equivalents of dicarboxylic acids having two functional carboxyl groups which perform substantially like dicarboxylic acids in reaction with amine groups in forming polyamide. These equivalents include esters and ester forming reactive derivatives, such as acid halides and anhydrides. Additionally, the dicarboxylic acids may contain any substituent groups(s) or combinations which do not substantially interfere with the polymer formation and use of the polymer of this invention.

Exemplary aliphatic dicarboxylic acids should desirably process two terminal carboxylic acid functional groups. The aliphatic dicarboxylic acids may desirably be represented by the formula:

HOOC-$R^{ac}$-COOH

wherein: $R^{ac}$ is $C_1$-$C_{20}$ alkylene group, preferably $C_2$-$C_{20}$ linear alkylene.

Illustrative reactant dicarboxylic acids are those selected from the group comprising alkyl dicarboxylic acids having a total of 2 to 16 carbons atoms and aryl dicarboxylic acids having a total of from 8 to 16 carbon atoms. Representative alkyl dicarboxylic acids include: malonic acid; glutaric acid; adipic acid; pimelic acid; succinic acid; sebacic acid; azelaic acid; and, undecanedioic acid; tridecanedioic acid (*brαssylic acid*); dodecanedioic acid (1,10-decanedicarboxylic acid); tetradecanedioic acid (1,12-dodecanedicarboxylic acid); pentadecanedioic acid (1,13-tridecanedicarboxylic acid); hexadecanedioic acid (1,14-tetradecanedicarboxylic acid, *thapsic acid*); and, octadecanedioic acid (1,16-hexadecanedicarboxylic acid).

For completeness, representative aryl dicarboxylic acid include: terephthalic acid; phthalic acid; isophthalic acid; the dimethyl derivatives of said acids; and, mixtures thereof.

In certain important embodiments, said at least one reactant dicarboxylic acid comprises or consists of at least one dimerized $C_{12}$ to $C_{24}$ unsaturated fatty acid, more particularly at least one dimerized $C_{16-20}$ unsaturated fatty acid. Thirty-six carbon ($C_{36}$) dimer acids obtained by the dimerization of unsaturated $C_{18}$ acid - such as oleic acid, linoleic acid, linolenic acid and mixtures thereof - have particular utility in the preparation of the polyamides.

As disclosed in the instructive references US Patent No. 2,793,219 and US Patent No. 2,955,121, said dimer acids may be produced by condensing two moles of unsaturated monocarboxylic acid, optionally under catalysis; the monocarboxylic acid molecules which react may either be the same or different.

Dimer acids may of course be obtained from commercial sources: as would be recognized by the skilled artisan, commercial sources have variant purity and will contain by-product monobasic acids, trimer acids or higher polymer acids in addition to the dimer acid. Commercial sources having a less than 30 wt.% or less than 15 wt.% of such by-product acids, based on the total weight of acid, are preferred.

The dimer acids may also be hydrogenated prior to use and / or molecularly distilled or otherwise purified to increase the dimer content to 90% or more. The present disclosure does not therefore precluded completely saturated dimer acids being utilized as a reactant in the amidation. The dimerized acid product, in certain embodiments, have an iodine value of less than 20 as determined by Fourier Transform Infrared Spectroscopy.

To control the melt viscosity of the polyamide that is produced, at least one monocarboxylic acid may be included in the acid component being reacted. For example, the acid component may include from 0 to 10 wt.%, such as from 0 to 5 wt.% of monocarboxylic acid, based on the total weight of reactants. It is preferred to utilize monocarboxylic acids having relatively low volatilities: mention may be made of straight or branched chain, saturated or unsaturated monocarboxylic acids having at least 6, for instance at least 8 or at least 10 carbon atoms of which examples include: lauric acid; palmitic acid; oleic acid; and, stearic acid. Given that commercial sources of dimer acids conventionally contain low levels of monocarboxylic acids, it may not be necessary to independently add these acids but such addition or supplementation is of course not precluded.

The reactant primary diamine of the amidation *(condensation)* reaction may be represented by the formula $H_2N$-$R^{am}$-$NH_2$ where $R^{am}$ is a divalent aliphatic, cycloaliphatic or aromatic radical. In certain embodiments, it is preferred that $R^{am}$ be an aliphatic radical.

Suitable diamines for the synthesis of the polyamide, which may be used alone or in combination, include but are not limited to the following.

i) Aliphatic, cycloaliphatic or arylaliphatic primary diamines of which the following examples may be mentioned: ethylenediamine; 1,2-propylenediamine; 1,3-propylenediamine; tetramethylenediamine; 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo [5.2.1.0$^{2,6}$]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA). Of the aliphatic diamines, a preference may be noted for the use as (co)-reactant of compounds of formula $H_2N$-$R^{am}$-$NH_2$, wherein $R^{am}$ is $C_2$-$C_{12}$ alkylene.

ii) Ether group-containing aliphatic primary diamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine® RFD-270 (from Huntsman); polyoxyalkylenediamines obtainable as products from the amination of polyoxyalkylenediols and which are commercially available under the name of Jeffamine® (from Huntsman), under the name of polyetheramine (from BASF) or under the name of PC Amines® (from Nitroil). A particular preference may be noted for the use of Jeffamine® D-230, Jeffamine® D-400, Jeffamine® D-600, Jeffamine® D-2000, Jeffamine® D-4000, Jeffamine® T-403, Jeffamine® T-3000, Jeffamine® T-5000, Jeffamine® EDR-104, Jeffamine® EDR-148 and Jeffamine® EDR-176, as well as corresponding amines from BASF or Nitroil.

iii) Aromatic diamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure® 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink® from Air Products); 1,2-bis(2-aminophenylthio)ethane, 2-methylpropyl-(4-chloro-3,5-diaminobenzoate); and, tert.butyl-(4-chloro-3,5-diaminobenzoate).

iv) Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid® 100, 125, 140 and 150 (from Cognis); Aradur® 223, 250 and 848 (from Huntsman); Euretek® 3607 and 530 (from Huntsman); and, Beckopox® EH 651, EH 654, EH 655, EH 661 and EH 663 (from Cytec).

It is opined that the amine component may comprise a polyamine having secondary amino groups. Such a polyamine may comprise only secondary amino groups or both of a primary amino or a secondary amino group. It is however important that such secondary amine groups are reactive and therefore polyamines possessing secondary amino groups which have low reactivity - due to *inter alia* steric hindrance, delocalization of unbonded electron pairs into aromatic rings (especially nitrated aromatic rings) and other electron-withdrawing or undesirable inductive effects - should preferably be avoided.

Exemplary compounds possessing secondary amino groups which may constitute part of the amine component include but are not limited to: piperazine; N-aminoalkyl piperazines, such as N-aminoethyl piperazine; and, 1,2-dimethyl-2-aminopropyl piperadine.

The number of free acid groups and / or free amine groups present in the polyamide derived by amidation *(condensation)* are directly related to the relative amounts of the acid component and the amine component involved in the polymerization reaction and the degree of completion of the reaction. Herein, the polyamide may be either acid-terminated, amine-terminated or contain both acid and amine terminal groups. Further, the terminal groups of the polyamide may also be non-functional: for example, the polyamide may possess a terminal alkyl group derived from a monocarboxylic acid added to the acid component to control the molecular weight and viscosity of the polyamide.

Generally speaking, polyamides that are acid-terminated tend to demonstrate better stability at elevated temperatures than the corresponding amine-terminated polyamides. However, the amine-terminated polyamides tend to exhibit better adhesion to substrate surfaces. It is preferred herein that the amidation *(condensation)* reaction be stoichiometric and, independently, be performed under conditions that ensure at least substantial completion of the reaction. In important embodiments, the ratio of total acid to total amine groups in the amidation *(condensation)* reaction is from 0.9:1 to 1.1:1, for instance from 0.95:1 to 1.05:1.

The polyamides may be prepared using conventional procedures and reaction conditions known to the art. It should be noted that, while reference is made to acid and amine components for purposes of determining the relative amounts of each acid and amine used to prepare the polyamide, there is no need to form a separate premix of acids and a separate premix of amines, nor is it required that all reactants be charged together at the beginning of the reaction.

Exemplary reaction conditions include but are not limited to: a temperature of from 100° to 300°C, such as from 125° to 225°C; an inert atmosphere; and, a duration of from 1 to 10 hours, such as from 2 to 8 hours. Those conditions aside, it is known to apply a vacuum during the final stages of the amidation reaction to facilitate removal of the final traces of water and any other volatile materials: applying a high vacuum will tend to result in the production of a polyamide having a higher molecular weight and correspondingly higher viscosity, which generally reduces the brittleness of the polyamide (as reflected in higher elongation values). The amidation reaction may, in certain embodiments, be performed in the presence

of a catalyst, such as phosphoric acid, hypophosphoric acid, sodium benzene phosphonate or sodium benzene phosphinite.

The degree of completion of the amidation reaction can be determined by evaluating the acid number and the amine number of the final polymer. In general, the acid and amine components may be reacted until the final product has an acid value and an amine value less than 20 mg KOH/g, in particular less than 15 mg KOH/g. The crude product so-obtained may subsequently be separated and purified by methods known in the art, including but not limited to solvent extraction, filtration, evaporation, distillation, (re-)crystallization and chromatography. Mention may in particular be made of the recrystallization of the product from a $C_1$-$C_4$ alkanol, such as methanol.

In an alternative embodiment, the polyamide of the hot melt adhesive composition may be a polymer obtained by the anionic ring-opening polymerization of at least one cyclic lactam monomer having the formula:

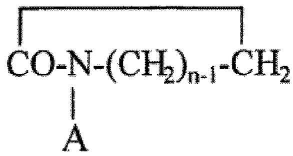

wherein: A is H or $C_1$-$C_8$ alkyl; and, n is an integer of from 3 to 11. Exemplary cyclic lactam monomers, which may be homo- or co-polymerized, include: butanolactam; pentanolactam; hexanolactam; heptanolactam; octanolactam; nonanolactam; decanolactam; undecanolactam; dodecanolactam; N-methyl hexanolactam; N-n-octyl nonanolactam; and, N-t-butyl dodecanolactam.

The above synthetic processes aside, the polyamides may be sourced commercially. For completeness, commercial polyamides having utility in the hotmelt adhesives of the present disclosure include: Technomelt PA633, Technomelt PA641, Technomelt PA646, Technomelt PA651 , Technomelt PA652, Technomelt PA657, Technomelt PA641, Technomelt PA673, Technomelt PA682, Technomelt PA6208, Technomelt PA6790, Technomelt PA6801, Technomelt PA6830, Technomelt PA6832, Technomelt PA6839 and Technomelt TPX 22-547 (previously TCRF12014), Technomelt PA 6208 and Technomelt PA 2333B, all available from Henkel Corporation.

b) Tackifying Resin

The hot melt adhesive composition of the present invention comprises from 0 to 50 wt.%, based on the weight of the composition, of b) at least one tackifying resin. Conventionally, the tackifier b) will be present in an amount up to 40 wt.%, based on the weight of the composition, such as from 10 to 40 wt.% or from 15 to 30 wt %, based on the weight of the composition.

The tackifying resin(s) should be characterized by: a softening point of from 70 to 150°C.; and, a viscosity at 190°C. of less than 6000 mPa.s.

Exemplary tackifying resins which may be used alone or in combination in the present invention include: aliphatic and cycloaliphatic petroleum hydrocarbon resins; aromatic petroleum hydrocarbon resins and the hydrogenated derivatives thereof; aliphatic / aromatic petroleum derived hydrocarbon resins and the hydrogenated derivatives; polycyclopentadiene resins, hydrogenated polycyclopentadiene resins and aromatic modified hydrogenated polycyclopentediene resins; terpenes, aromatic terpenes and hydrogenated terpenes; polyterpenes, aromatic modified polyterpenes and terpene phenolics; copolymers of $\alpha$-methylstyrene and a further vinyl aromatic monomer; and, gum rosins, gum rosin esters, wood rosins, wood rosin esters, tall oil rosins, tall oil rosin esters and hydrogenated rosin esters.

Exemplary commercial tackifying resins having utility in the present invention include: Arkon™ P-70, P-90, P-100, P-125, P-115, M-90, M-100, M-110 and M-120 hydrogenated $C_5$ and/or $C_9$ hydrocarbon feed stocks available from Arakawa Chemical; Eastotac® H-100, H-115, H-130 and H-142R, available from Eastman Chemical Co.; Escorez® 5300, 5320, 5380, 5400, 5600 and 5637, available from Exxon Chemical Co.; WINGTACK® 95 and WINGTACK® Extra, available from Sartomer; and, Regalite R9001 and Regalite S5100, available from Eastman Chemical Company.

In an embodiment of the present invention, the composition is characterized in that said ingredient b) comprises at least one resin selected from polycyclopentadiene resins, hydrogenated polycyclopentadiene resins and aromatic modified hydrogenated polycyclopentediene resins.

In a further embodiment, which is not intended to be mutually exclusive of the above described embodiment, the composition is characterized in that said ingredient b) comprises at least one copolymer of $\alpha$-methylstyrene and a further vinyl aromatic monomer. For example, the composition may comprise from 10 to 40 wt.%, based on the weight of the composition, of at least one copolymer of $\alpha$-methylstyrene and a further vinyl aromatic monomer. Good results have been obtained where the hot melt adhesive composition will comprise from 10 to 35 wt %, for example from 10 to 30 wt.%, based on the weight of the composition, of b) at least one copolymer of $\alpha$-methylstyrene and a further vinyl aromatic monomer.

When employed, the vinyl aromatic/$\alpha$-methylstyrene copolymer or copolymers included in the present composition should preferably be characterized by a weight average molecular weight (Mw) of 40,000 daltons and preferably a weight average molecular weight (Mw) of at least 100,000 daltons.

The vinyl aromatic monomer of the copolymer should be selected from the group consisting of: styrene; 4-tert-butylstyrene; o-methylstyrene; p-methylstyrene; divinylbenzene; 1,1-diphenylethylene; vinylnaphthalene; N,N-dimethyl-p-aminoethylstyrene; N,N-diethyl-p-aminoethylstyrene; and, combinations thereof.

In a preferred embodiment, the composition is characterized in that said ingredient c) comprises or consists of at least one styrene/α-methylstyrene (SAMS) copolymer. Reference may be made to the following citations for exemplary methods by which SAMS copolymers may be synthesized: US Patent No. 2,975,160; US Patent No. 3,030,346; US Patent No. 3,031,432; US Patent No. 3,139,416; US Patent No. 3,157,604; US Patent No. 3,159,587; US Patent No. 3,231,635; US Patent No. 3,498,960; US Patent No. 3,590,008; US Patent No. 3,751,403; US Patent No. 3,954,894; US Patent No. 4,183,877; US Patent No. 4,196,153; US Patent No. 4,196,154; US Patent No. 4,200,713; and US Patent No. 4,205,016.

c) Waxes

The present hot melt adhesive composition comprises from 0 to 50 wt.%, based on the weight of the composition, of wax. Conventionally the composition will comprise c) wax in an amount up to 40 wt.%, such as from 10 to 40 wt.% or from 15 to 30 wt.% of wax. Said waxes are added to the hot melt composition to reduce the melt viscosity thereof. These waxes, which are solid at room temperature, may also be determinative of the set-up time and the softening point of the adhesive.

Without intention to limit the present invention, waxes having utility in the present invention should have a softening point of from 50 to 150°C and may include one or more of: i) polyethylene having a number average molecular weight (Mn) from 500 to 7500; ii) petroleum waxes, such as paraffin wax and microcrystalline wax; iii) synthetic waxes made by polymerizing carbon monoxide and hydrogen, such as Fischer-Tropsch wax; iv) polyolefin waxes; and, v) hydrogenated animal, fish or vegetable oils.

To impart heat resistance, it is preferred that the wax c) of the composition comprises or consists of at least one functionalized polyolefin. Broadly, said at least one functional polyolefin should be added in an amount effective to increase the heat resistance of the composition by at least 5°C relative to a composition in which said ingredient is absent. In an alternative expression, the present composition may comprise from 5 to 40 wt.% of said at least one functional polyolefin, based on the weight of the composition. It is preferred that the composition comprises from 5 to 35 wt.%, based on the weight of the composition, of said at least one functional polyolefin.

The or each functionalized polyolefin included in the composition should preferably be characterized by a weight average molecular weight of from 2,000 to 20,000 daltons, for example from 2,500 to 15,000 daltons.

Representative olefin monomers from which the functional polyolefin is derived and which may be used alone or in combination, include but are not limited to: ethylene; propylene; butylenes; pentene; hexylene; heptene; and, octene. A preference for the use of ethylene and / or propylene may be mentioned.

Representative functionalizing monomers include: aliphatic and cycloaliphatic (meth)acrylate monomers; aromatic (meth)acrylate monomers; (meth)acrylate-functionalized oligomer; α,β-ethylenically unsaturated dicarboxylic acids containing from 4 to 6 carbon atoms and the anhydrides, monoesters, and diesters of those acids; α,β-ethylenically unsaturated monocarboxylic acids containing 3 to 5 carbon atoms such as acrylic acid, methacrylic acid, crotonic acid; $C_1$-$C_{18}$ alkyl esters of crotonic acid; silicone (meth)acrylate monomers, such as those taught by and claimed in US Patent No. 5,605,999 (Chu); poly(meth)acrylates of alkane polyols; poly(meth)acrylates of oxyalkane polyols; vinyl esters such as vinyl acetate, vinyl propionate and monomers of the VEOVA™ series available from Shell Chemical Company; vinyl and vinylidene halides; vinyl ethers such as vinyl ethyl ether; and, vinyl ketones including alkyl vinyl ketones, cycloalkyl vinyl ketones, aryl vinyl ketones, arylalkyl vinyl ketones, and arylcycloalkyl vinyl ketones.

In an embodiment of the invention, the functionalizing monomer may be at least one (meth)acrylate monomer represented by Formula I:

$$H_2C{=}CGCO_2R^1 \qquad (I)$$

wherein:

G is hydrogen, halogen or a $C_1$-$C_4$ alkyl group; and,
$R^1$ is selected from: $C_1$-$C_{30}$ alkyl; $C_1$-$C_{18}$ hydroxyalkyl; $C_2$-$C_{30}$ heteroalkyl; $C_3$-$C_{30}$ cycloalkyl; $C_2$-$C_8$ heterocycloalkyl; $C_2$-$C_{20}$ alkenyl; and, $C_2$-$C_{12}$ alkynyl.

For example, $R^1$ may be selected from $C_1$-$C_{18}$ alkyl, $C_1$-$C_{18}$ hydroxyalkyl, $C_2$-$C_{18}$ heteroalkyl, $C_3$-$C_{18}$ cycloalkyl; $C_2$-$C_8$ heterocycloalkyl; $C_2$-$C_8$ alkenyl, and, $C_2$-$C_8$ alkynyl. More particularly, $R^1$ is selected from $C_1$-$C_{18}$ alkyl, $C_1$-$C_{12}$ hydroxylalkyl and $C_3$-$C_{18}$ cycloalkyl. This statement of preference is expressly intended to include that embodiment wherein $R^1$ is $C_1$-$C_6$ hydroxylalkyl.

Examples of (meth)acrylate monomers in accordance with Formula (I) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth) crylate; trifluoroethyl (meth)acrylate; and, perfluorooctyl (meth)acrylate.

In an embodiment of the invention, the functionalizing monomer may be at least one at least one (meth)acrylate monomer represented by Formula II:

$$H_2C{=}CQCO_2R^2 \qquad (II)$$

wherein:

Q may be hydrogen, halogen or a $C_1$-$C_4$ alkyl group; and,
$R^2$ may be selected from $C_6$-$C_{18}$ aryl, $C_1$-$C_9$ heteroaryl, $C_7$-$C_{18}$ alkaryl and $C_7$-$C_{18}$ aralkyl.

Exemplary (meth)acrylate monomers in accordance with Formula (II) - which may be used alone or in combination - include but are not limited to: benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

Where the functionality is imparted to the polyolefin through at least one (meth)acrylate-functionalized oligomer, said oligomers may have one or more acrylate and/or methacrylate groups attached to the oligomeric backbone, which (meth)acrylate functional groups may be in a terminal position on the oligomer and / or may be distributed along the oligomeric backbone. It is preferred that said at least one (meth)acrylate functionalized oligomers: i) have two or more (meth)acrylate functional groups per molecule; and / or, ii) have a weight average molecular weight (Mw) of from 300 to 1000 daltons.

Examples of such oligomers, which may be used alone or in combination, include but are not limited to: (meth) acrylate-functionalized urethane oligomers such as (meth)acrylate-functionalized polyester urethanes and (meth)acrylate-functionalized polyether urethanes; (meth)acrylate-functionalized polyepoxide resins; (meth)acrylate-functionalized polybutadienes; (meth)acrylic polyol (meth)acrylates; polyester (meth)acrylate oligomers; polyamide (meth)acrylate oligomers; and, polyether (meth)acrylate oligomers. Such (meth)acrylate-functionalized oligomers and their methods of preparation are disclosed in *inter alia*: US Patent No. 4,574,138; US Patent No. 4,439,600; US Patent No. 4,380,613; US Patent No. 4,309,526; US Patent No. 4,295,909; US Patent No. 4,018,851; US Patent No. 3,676,398; US Patent No. 3,770,602; US Patent No. 4,072,529; US Patent No. 4,511,732; US Patent No. 3,700,643; US Patent No. 4,133,723; US Patent No. 4,188,455; US Patent No. 4,206,025; US Patent No. 5,002,976. Of the aforementioned polyether (meth) acrylates oligomers, specific examples include but are not limited to: PEG 200 DMA ($n \approx 4$); PEG 400 DMA ($n \approx 9$); PEG 600 DMA ($n \approx 14$); and, PEG 800 DMA ($n \approx 19$), in which the assigned number (e.g., 400) represents the weight average molecular weight of the glycol portion of the molecule.

Representative examples of poly(meth)acrylates of alkane polyols include but are not limited to: ethylene glycol di(meth)acrylate; propylene glycol di(meth)acrylate; butylene glycol di(meth)acrylate; neopentyl glycol di(meth)acrylate; hexylene glycol di(meth)acrylate; trimethylolpropane tri(meth)acrylate; glycerin tri(meth)acrylate; and, pentaerythritol tetra(meth)acrylate. Representative examples of poly(meth)acrylates of oxyalkane polyols include but are not limited to: diethylene glycol di(meth)acrylate; dipropylene glycol di(meth)acrylate; triethylene glycol di(meth)acrylate; tetraethylene glycol di(meth)acrylate; dibutylene glycol di(meth)acrylate; di(pentamethylene glycol)dimethacrylate; polyethylene glycol di(meth)acrylates; and; bisphenol-A di(meth)acrylates, such as ethoxylated bisphenol-A (meth)acrylate ("EBIPMA").

The above noted, it is preferred that the functionalizing monomers are selected from the group consisting of: aliphatic and cycloaliphatic (meth)acrylate monomers; aromatic (meth)acrylate monomers; (meth)acrylate-functionalized oligomer; $\alpha,\beta$-ethylenically unsaturated dicarboxylic acids containing from 4 to 6 carbon atoms and the anhydrides, monoesters, and diesters of those acids; and, $\alpha,\beta$-ethylenically unsaturated monocarboxylic acids containing 3 to 5 carbon atoms such as acrylic acid, methacrylic acid, crotonic acid; $C_1$-$C_{18}$ alkyl esters of crotonic acid.

A particular preference may be noted for the $\alpha,\beta$-ethylenically unsaturated dicarboxylic acids containing from 4 to 6 carbon atoms and the anhydrides, $C_1$-$C_4$ alkyl monoesters and $C_1$-$C_4$ alkyl diesters of those acids. The use of fumaric anhydride, maleic anhydride and itaconic anhydride is favored, of which maleic anhydride is most favored.

Good results have been obtained where the composition comprises at least one of: maleated polyethylene; maleated polypropylene; or, maleated poly(ethylene-co-propylene). Exemplary commercial maleated polyethylene and maleated polypropylene polymers which may have utility herein include: EPOLENE E-43, G-3015, and G-3003 available from Eastman Chemical; A-C 575, A-C 573, available from Honeywell; Fusabond E and Fusabond P available from DuPont.

d) Stabilizer

"*Stabilizers*" for purposes of this invention are to be understood as antioxidants, UV stabilizers, thermal stabilizers or hydrolysis stabilizers. Herein stabilizers d) constitute *in toto* from 0 to 5 wt.% or from 0.1 to 2.5 wt.%, based on the total weight of the composition. Standard examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphite compounds; sulfur containing anti-oxidants, such as thioethers and thiodipropionate esters; and, mixtures thereof.

Sterically hindered phenols are well known to those skilled in the art and may be characterized as phenolic compounds which also contain sterically bulky radicals - such as tertiary butyl groups - in close proximity to the phenolic hydroxyl group thereof. The presence of these radicals in the vicinity of the hydroxyl group serves to retard its stretching frequency, and correspondingly, its reactivity. Representative sterically hindered phenols include: 1,3,5-trimethyl-2,4,6-tris-(3,5-di-tert-butyl-4-hydroxybenzyl)-benzene; pentaerythrityl tetrakis-3(3,5-d i-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxybenzoate; and, sorbitol hexa[3-(3,5-di-tert-butyl-4-hydroxy-phenyl)-propionate].

Exemplary commercial stabilizers which may be used alone or in combination include: Octamine F, available from SI Group; SUMILIZER™ GM, SUMILIZER™TPD and SUMILIZER™ TPS manufactured by Sumitomo Chemical Co., Ltd.; IRGANOX™ 656, IRGANOX™ 1010, IRGANOX™ HP2225FF, IRGAFOS™168, IRGANOX™ 1076, IRGANOX™ 1520, IRGANOX™ 1726, and TINUVIN™ P manufactured by Ciba Specialty Chemicals; JF77™ manufactured by Johoku Chemical Co., Ltd.; TOMINOX™ TT manufactured by API Corporation; Cyanox® LTDP, available from Cytec Industries; Ethanox® 330, available from Albemarle Corp; and, AO-412STM manufactured by ADEKA CORPORATION.

e) Adjunct and Additive Ingredients of the Hot Melt Adhesive Composition

The compositions of the present invention may, of course, also contain standard additives such as pigments, fillers, plasticizers, levelling agents, foam suppressing agents, rheology control agents and catalysts. The choice of appropriate additives is limited only in that these must be compatible with the other components of the composition and cannot be deleterious to the use of the composition. However, as noted above, it is preferred that the composition is substantially free of solvent.

When fillers are employed, they should typically be included in an amount of up to 75% by weight, for example up to 50 wt.% or up to 30 wt.%, based on the weight of the composition. Suitable for use as fillers herein are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

In certain embodiments, plasticizers may be included to moderate the softness and flexibility of the cured composition. One or more plasticizers may in this case be selected from the group consisting of: vegetable oil; mineral oil; soybean oil; aromatic esters such as dioctyl phthalate, diundecyl phthalate, tricresyl phosphate and triisononyl mellitate; linear esters such as di-tridecyl adipate; chlorinated paraffin; aromatic and napthenic process oils; alkyl naphthalenes; and, low molecular weight polyisoprene, polybutadiene, or polybutylene resins. Conventionally, the amount of plasticizer should be from 0 to 20 wt.%, preferably from 0 to 10 wt.% or from 0 to 5 wt.% based on the total weight of the hot melt composition.

**Application of the Hot Melt Adhesive**

The hot melt adhesive composition of the present disclosure may be formulated by bringing together the constituent ingredients in pre-determined amounts. In those embodiments where the ingredients are to be mixed, this may be performed using any of the mixing techniques known in the art: it would certainly be preferred however that the ingredients are not mixed by hand but are instead mixed by machine - a static or dynamic mixer, for example - in pre-determined amounts under anhydrous conditions.

A first representative example of a mixing procedure involves placing all the components, except the base polymers, in a jacketed mixing kettle equipped with a rotor, and thereafter elevating the temperature of the mixture to a temperature above the softening point of the base polymer which is to be added: a temperature of from 150°C to 200°C may be sufficient but it will be understood that the precise temperature would depend on the softening points and melting points of the particular ingredients. The polymers are subsequently introduced to the kettle under agitation and the mixing

is allowed to continue until a consistent and homogenous mixture is formed. The contents of the kettle may be protected with an inert gas, such as carbon dioxide or nitrogen, during the entire mixing process.

In a second representative example of a mixing procedure, a resin or oil adapted to the chemistry of the base polymer(s) is first charged into the mixing kettle. The resin or oil is then melted or conditioned to yield a liquid to which the base polymer is then added stepwise so that it becomes dissolved in the liquid. The remaining ingredients are added to the mixing kettle after the addition of the base polymer(s).

In a further representative example, all ingredients of the composition may either be brought together or mixed homogenously together in solid form. The provided solid can then be disposed in a melting tank and brought to the requisite temperature for dispensing in a molten form. Again the precise temperature of the melting tank would depend on the softening points and melting points of the particular ingredients.

The person of ordinary skill in the art will be able to select the most appropriate method and loci for the application of the hot melt composition to the second elastomeric substrate. The application of the hot melt composition may, for instance, be either through contact or non-contact means; as exemplary non-contact methodologies, there may be mentioned jetting, omega coating, control seam coating, slot spray coating, curtain spray coating and dot coating. The application of the hot melt composition under pressure is not required but should a pressurized application be elected, suitable pressures may from 2 to 60 bars, for example from 2 to 20 bars.

The above aside, central to any method of application is that the hot melt composition is sufficiently fluid upon application for it to form a levelled coating upon the application surface. Useful application temperatures will typically range from 100°C to 250°C or from 125°C to 200°C with lower temperatures within this range being preferred as they may extend the working life of the composition. The temperature of the composition may be raised above its mixing temperature to the application temperature using conventional means, including by microwave induction.

**Contacting of Elastomeric Substrates**

As noted above, the method of the present invention comprises the steps of: iii) incubating the first, second and optionally third composition with said first elastomeric substrate for a time period and under conditions that allow chlorination of the surface of said first substrate; iv) applying an adhesive composition, as defined hereinabove, to the surface of said second elastomeric substrate; and, v) contacting the chlorinated surface of the first substrate and the surface of the second substrate with the applied adhesive under pressure to form the bond.

It is considered that the step v) of contacting the first and second substrates can be carried out using known equipment, such as by hands, rolls, plates or other suitable equipment. A preference may be noted for carrying out step (v) by hands.

Preferably the contact within 60 seconds, preferably within 10 seconds, more preferably within 5 seconds after applying the adhesive.

The following examples are illustrative of the present invention and are not intended to limit the scope of the invention in any way.

**EXAMPLES**

First composition:

| | |
|---|---|
| LINA 885 A | Acidic sodium chloide solution (2 moles per litre) |

Second composition:

| | |
|---|---|
| LINA 885 B | Acidic potassium peroxymonosulfate solution (0.6 moles per litre) |

Hot melt adhesive 1 (hereinafter *HMA1* / in accordance with the present invention):

| | |
|---|---|
| Technomelt PA 6208 | Polyamide hot melt adhesive composition based on dimer fatty acid and polyoxyalkyleneamine, said adhesive having a melt viscosity of from 3600 mPa.s as determined at a shear rate of $40s^{-1}$ at 190°C; available from Henkel Corporation. |

Hot melt adhesive 2 (hereinafter *HMA2* / in accordance with the present invention):

| | |
|---|---|
| Technomelt PA 2333B | Polyamide hot melt adhesive composition based on dimer fatty acid and polyoxyalkyleneamine, said adhesive having a melt viscosity of from 3000 mPa.s as determined at a shear rate of $40s^{-1}$ at 190°C; available from Henkel Corporation. |

Adhesive composition 1 (hereinafter *CA1*):

| | |
|---|---|
| LINA 888 | two-part (2K) polyurethan adhesive composition |

Adhesive composition 2 (hereinafter *CA2*):

| | |
|---|---|
| LINA 889 | two-part (2K) polyurethan adhesive composition |

**Example 1**

The following test methods were then used to characterize the adhesive formulations and bonded rubber composites obtained using said adhesive formulations.

Shore Hardness: Sample discs were prepared of HMA1 and HMA2 by melting the respective compositions in an aluminium cup at 190°C, which temperature is above the softening point of the constituent polyamide base polymers: the molten compositions were each transferred into a disc-shaped Teflon mold (*60 mm diameter; 10 mm depth*) for solidification.

Sample discs of CA1 and CA2 were prepared by mixing with a double cartridge in a pneumatic gun and applying into a disc-shaped Teflon mold (*60 mm diameter; 10 mm depth*) for solidification.

The Shore hardness was determined by pressing a hand-held durometer - Zwick 3130 for Shore A hardness and Zwick 3131 for Shore D hardness - onto the sample (15 seconds contact time before measurement) in accordance with ISO 868. The hardness was recorded after the initial solidification and further monitored upon release of the disc from the mold every 5 minutes under room temperature and pressure, noting the attainment of both Shore 75 A and Shore 85 A hardness. The tabulated data point below represents final hardness as recorded after 24 hours of conditioning at room temperature and pressure for polyamide, 5 days at room temperature for polyurea.

Rubber Test Specimen Preparation: Test specimens are prepared using natural rubber coupons which have all been wiped with methylethylketone (MEK) to remove dirt, oil, grease and all other surface contaminants therefrom. The first and second composition are then applied in 1:1 ratio by weight. After 15-30 minutes reaction time the rubber is wiped with a well wetted, clean rag to remove all for the applied compositions.

Each adhesive composition to be evaluated (HMA1, HMA2, CA1, CA2) was applied to the treated surface of a rubber coupon. CA1 and CA2 are applied using a double cartridge and a pneumatic gun at room temperature on one side of the treated rubber and then the specimen is closed with the second piece of the rubber. HMA1 and HMA2 are applied by using a low pressure molding gun at 220°C on one side of the treated rubber and then the specimen is closed with the second piece of the rubber.

Fixture Time: This quantification is used herein to denote the shortest time required by an adhesive to develop handling strength such that the aforementioned test specimens can be removed from fixtures, unclamped, or handled without stressing the bond, thereby affecting bond strength.

T-Peel Resistance (N/mm): The testing of this parameter was based on the following standard: ISO 11339 Adhesives *180° Peel Test for Flexible-to-Flexible Bonded Assemblies.* At least three natural rubber test specimens were

assembled and tested for each test point.

Tensile Strength and Elongation: These properties were determined for the natural rubber test specimens in accordance with Henkel STM 708 *Tensile Strength and Elongation of Cured Elastomeric Adhesives and Coatings* AC89, which method is in demonstrated compliance with ISO/IEC Standard 17025:2017 (IAS Accreditation Criteria for Testing Laboratories).

The results of these tests are provided in Table 4 herein below.

Table 4

| **Evaluated Property** | **Adhesive Applied to Surface Treated Natural Rubber** | | | |
|---|---|---|---|---|
| | **HMA1** | **HMA2** | **CA1** | **CA2** |
| Fixture Time (s) | 15 | 15 | > 1800 | > 900 |
| Shore A | 88 | 90 | 65 | 66 |
| Tensile Strength (N/mm$^2$) | 4.0 | 2.8 | 18.0 | 14.0 |
| Elongation (%) | 500 | 320 | 550 | 440 |
| T-Peel (N/mm) | 8.0 | 5.0 | 9.0 | 9.0 |
| Green Strength at 0 minutes (N/mm) | 2.5 | 1.8 | 0.0 | 0.0 |

In view of the foregoing description and example, it will be apparent to those skilled in the art that equivalent modifications thereof can be made without departing from the scope of the claims.

## Claims

**1.** A method for forming a bond between a first elastomeric substrate and a second elastomeric substrate, said process comprising:

i) applying a first and a second composition to the surface of said first substrate, wherein:

the first composition is an aqueous composition comprising chloride ($Cl^-$); and,
the second composition is an aqueous composition comprising peroxymonosulfate ($HSO_5^-/SO_5^{2-}$);

ii) optionally applying a third composition comprising activated carbon to the surface of said first substrate;
iii) incubating the first, second and optionally third composition with said first substrate for a time period and under conditions that allow chlorination of the surface of said first substrate;
iv) applying an adhesive composition to the surface of said second substrate, wherein the adhesive composition is a hot melt adhesive composition comprising, based on the total weight of the composition:

from 50 to 100 wt.% of a) at least one base polymer selected from the group consisting of polyamides;
from 0 to 50 wt.% of b) at least one tackifying resin;
from 0 to 50 wt.% of c) wax; and,
from 0 to 5 wt.% of d) at least one stabilizer selected from the group consisting of antioxidants, UV stabilizers, thermal stabilizers and hydrolysis stabilizers; and,

v) contacting the chlorinated surface of the first substrate and the surface of the second substrate with the applied adhesive under pressure to form the bond.

**2.** The method according to claim 1, wherein said first and second substrates each comprise or consist of at least one elastomer having a glass transition temperature (Tg) of from -120 to 0°C.

**3.** The method according to claim 1 or claim 2, wherein said first and second substrates are independently selected from the group consisting of: natural rubber (NR); derivatives of natural rubber; ethylene-propylene-diene rubber (EPDM); ethylene propylene rubber (EPM); acrylonitrile-butadiene rubber (NBR); polychloroprene; styrene-butadiene rubber (SBR); styrene-butadiene-styrene rubber (SBS); butadiene rubber (BR); isoprene rubber (IR); styrene ethylene butylene styrene rubber (SEBS); rubbers based on copolymers of any two or more of styrene, butadiene, ethylene and

isoprene; and, blends thereof;
preferably wherein said first and second substrates are independently selected from natural rubber, acrylonitrile-butadiene rubber (NBR) or styrene-butadiene rubber.

**4.** The method according to any one of claims 1 to 3, wherein said first composition is an aqueous solution of a chloride salt which contains chloride ions, preferably wherein said first composition is an aqueous solution of an alkali metal chloride salt.

**5.** The method according to claim 4, wherein said aqueous solution contains chloride ions ($Cl^-$) in an amount of from 0.5 to 6 moles per litre, for instance from 1 to 4 moles per litre or from 1.5 to 3 moles per litre.

**6.** The method according to any one of claims 1 to 5, wherein said second composition is an aqueous composition comprising a peroxymonosulfate salt which contains peroxymonosulfate anions ($HSO_5^-/SO_5^{2-}$), preferably wherein said peroxymonosulfate salt is an alkali metal peroxymonosulfate salt.

**7.** The method according to any one of claims 1 to 6, wherein the peroxymonosulfate ($HSO_5^-/SO_5^{2-}$) concentration of the second composition is from 0.1 to 5 moles per litre, for example from 0.2 to 3 or from 0.4 to 1 moles per litre.

**8.** The method according to any one of claims 1 to 7, wherein said first (F) and second (S) compositions are applied at a ratio by weight (F:S) of from 3:1 to 1:3, preferably 2:1 to 1:2 and more preferably 1.5:1 to 1:1.5.

**9.** The method according to any one of claims 1 to 8, wherein said first and / or said second composition comprises up to 5 wt.%, based on the weight of the respective composition, of rheology control agent.

**10.** The method according to any one of claims 1 to 9, wherein the first and second compositions are each applied to the surface of said first substrate in an amount of from 50 to 500 $g/m^2$, preferably from 100 to 300 $g/m^2$.

**11.** The method according to any one of claims 1 to 10, wherein step (iii) is **characterized by** at least one of:

a temperature of from 10 to 40°C; and,
a reaction time of from 1 to 60 minutes, preferably 5 to 30 minutes.

**12.** The process according to any one of claims 1 to 11 further comprising the step of cleaning the surface of the first substrate after step iii).

**13.** The process according to any one of claims 1 to 12, wherein the or each base polymer of the hot melt adhesive composition is **characterized by** at least one of:

a viscosity of from 1000 to 5000 mPa.s, as measured at 190°C under ASTM D3236; and,
a softening point of from 80 to 200°C as measured under ASTM E28.

**14.** A bonded product obtainable or obtained by the method as defined in any one of claims 1 to 13.

Europäisches Patentamt
European Patent Office
Office européen des brevets

# EUROPEAN SEARCH REPORT

Application Number
EP 24 15 6858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 444 026 A (PEERMAN DWIGHT E) 13 May 1969 (1969-05-13) * abstract, column 1, lines 10 to 42 * | 14 | INV. C09J5/02 C08C19/14 C08J7/12 |
| Y | EP 3 715 406 A1 (HENKEL AG & CO KGAA [DE]) 30 September 2020 (2020-09-30) * paragraphs [0001], [0017], [0018], [0022], [0027], [0028], [0029]; claims * | 1-14 | |
| Y | JP 2006 169456 A (DAICEL DEGUSSA LTD) 29 June 2006 (2006-06-29) * paragraphs [0001], [0011], [0015], [0044], [0055]; claims; examples * | 1-14 | |
| Y,D | JP H10 183082 A (TAOKA CHEMICAL CO LTD) 7 July 1998 (1998-07-07) * paragraphs [0001], [0007], [0010]; claims * | 1-14 | |

TECHNICAL FIELDS SEARCHED (IPC)

C09J
C08J

The present search report has been drawn up for all claims

| Place of search | Date of completion of the search | Examiner |
|---|---|---|
| Munich | 26 June 2024 | Kahl, Philipp |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 15 6858

This annex lists the patent family members relating to the patent documents cited in the above-mentioned European search report. The members are as contained in the European Patent Office EDP file on
The European Patent Office is in no way liable for these particulars which are merely given for the purpose of information.

26-06-2024

| Patent document cited in search report | Publication date | Patent family member(s) | Publication date |
|---|---|---|---|
| US 3444026 A | 13-05-1969 | BE 690966 A | 16-05-1967 |
| | | CH 489589 A | 30-04-1970 |
| | | DE 1720808 A1 | 07-10-1971 |
| | | DK 125602 B | 12-03-1973 |
| | | FR 1504148 A | 01-12-1967 |
| | | GB 1169102 A | 29-10-1969 |
| | | NL 6618456 A | 13-07-1967 |
| | | SE 346552 B | 10-07-1972 |
| | | US 3444026 A | 13-05-1969 |
| EP 3715406 A1 | 30-09-2020 | AU 2020250782 A1 | 25-11-2021 |
| | | BR 112021018957 A2 | 18-01-2022 |
| | | CA 3135236 A1 | 08-10-2020 |
| | | CL 2021002499 A1 | 17-06-2022 |
| | | CN 113614155 A | 05-11-2021 |
| | | EP 3715406 A1 | 30-09-2020 |
| | | JP 2022526552 A | 25-05-2022 |
| | | KR 20210140728 A | 23-11-2021 |
| | | US 2022017652 A1 | 20-01-2022 |
| | | WO 2020200857 A1 | 08-10-2020 |
| | | ZA 202108361 B | 31-08-2022 |
| JP 2006169456 A | 29-06-2006 | NONE | |
| JP H10183082 A | 07-07-1998 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3657046 A, Furukawa
- US 10202527 B2, Kulkarni
- CN 109762499 A
- JP H10183082 A
- US 2793219 A
- US 2955121 A
- US 2975160 A
- US 3030346 A
- US 3031432 A
- US 3139416 A
- US 3157604 A
- US 3159587 A
- US 3231635 A
- US 3498960 A
- US 3590008 A
- US 3751403 A
- US 3954894 A
- US 4183877 A
- US 4196153 A
- US 4196154 A
- US 4200713 A
- US 4205016 A
- US 5605999 A, Chu
- US 4574138 A
- US 4439600 A
- US 4380613 A
- US 4309526 A
- US 4295909 A
- US 4018851 A
- US 3676398 A
- US 3770602 A
- US 4072529 A
- US 4511732 A
- US 3700643 A
- US 4133723 A
- US 4188455 A
- US 4206025 A
- US 5002976 A